# EUROPEAN PATENT SPECIFICATION

(11) **EP 3 524 010 B1**
(45) Date of publication and mention of the grant of the patent: **16.06.2021**
(21) Application number: 17858819.0
(22) Date of filing: 09.10.2017
(51) Int. Cl.: H04W 36/00, H04W 92/20

(54) **CONTROLLING VALIDITY TIME OF UPLINK GRANT IN TARGET CELL DURING RACH-LESS HANDOVER**
STEUERUNG DER GÜLTIGKEITSZEIT EINER UPLINK-BERECHTIGUNG IN EINER ZIELZELLE WÄHREND EINES RACH-LOSEN HANDOVERS
COMMANDE DE TEMPS DE VALIDITÉ D'OCTROI DE LIAISON MONTANTE DANS UNE CELLULE CIBLE PENDANT UN TRANSFERT INTERCELLULAIRE SANS RACH

(30) Priority: 07.10.2016 US 201662405684 P
(43) Date of publication of application: 14.08.2019
(73) Proprietor: Telefonaktiebolaget LM Ericsson (PUBL), 164 83 Stockholm (SE)
(72) Inventor: SUNELL, Kai-Erik, 06600 Antibes (FR); ENBUSKE, Henrik, 113 41 Stockholm (SE); BERGQVIST, Jens, 587 37 Linköping (SE)
(74) Representative: Ericsson
(86) International application number: PCT/SE2017/050983
(87) International publication number: WO 2018/067063

(56) References cited:
- WO-A1-2010/002692
- WO-A1-2010/002692
- WO-A1-2015/127987
- WO-A1-2015/127987
- WO-A1-2016/116879
- WO-A1-2017/130852
- WO-A1-2017/180258
- US-A1- 2012 177 006
- US-A1- 2014 161 100
- CATT: "Consideration on RACH-less handover", 3GPP DRAFT; R2-162517_EMOB_RACHLESS HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 1 April 2016 (2016-04-01), XP051082147, Retrieved from the Internet: URL:http://www.3gpp.org/ftp/tsg_ran/WG2_RL 2/TSGR2_93bis/Docs/ [retrieved on 2016-04-01]
- QUALCOMM INCORPORATED: "Uplink Grant for RACH-less Handover", 3GPP DRAFT; R2-165687_UPLINKGRANT_RACHLESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051127084, Retrieved from the Internet: URL:http://www.3gpp.org/ftp/Meetings_3GPP_ SYNC/RAN2/Docs/ [retrieved on 2016-08-21]
- ETRI: "Considerations on Solution 1 and 2 for Mobility Enhancements", 3GPP DRAFT; R2-162899-CONSIDERATIONS ON SOLUTION 1 AND 2 FOR MOBILITY ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Dubrovnik, Croatia; 20160411 - 20160415 2 April 2016 (2016-04-02), XP051082629, Retrieved from the Internet: URL:http://www.3gpp.org/ftp/tsg_ran/WG2_RL 2/TSGR2_93bis/Docs/ [retrieved on 2016-04-02]
- Huawei HiSilicon: "Close to 0 ms HO interruption time for single Tx/Rx UE", TI: CLOSE TO 0 MS HO INTERRUPTION TIME FOR SINGLE TX/RX UE PUB - 3GPP DRAFT; R2-1703382, - 3RD GENERATION PARTNERSHIP PROJECT (3GPP, 3 April 2017 (2017-04-03), XP051253919, 650, ROUTE DES LUCIOLES ; F-06921 SOPHIA-ANTIPOLIS CEDEX ; FRANCE Retrieved from the Internet: URL:http://www.3gpp.org/ftp/Meetings_3GPP_ SYNC/RAN2/Docs/ REM

## Description

### TECHNICAL FIELD

The present application is generally related to wireless communication networks and is more particularly related to techniques for performing handover of a wireless device from a source cell served by a source base station to a target cell served by a target base station in such networks.

### BACKGROUND

The 3^{rd}-Generation Partnership Project (3GPP) is continuing its efforts to improve and expand upon the specifications for the 4^{th}-generation wireless communications technology commonly referred to as Long-Term Evolution, or LTE, and more formally known as the Evolved Universal Mobile Telecommunications System (UMTS) Terrestrial Radio Access Network, or E-UTRAN. As part of these efforts, a work item to enhance the mobility procedures in LTE was approved in working group RAN#71, in the 3GPP document RP-160636.

One of the solutions discussed as part of these enhancements involves a so-called RACH-less (random access channel-less) handover (HO) procedure. A RACH-less handover procedure is a handover procedure in which no random access procedure is performed in the target cell of the handover, when the wireless device (referred to as a user equipment, or UE, in 3GPP terminology) first begins transmitting in the target cell during the handover procedure.

Rather than performing a random access procedure with the target cell as part of the handover process, the wireless device to be handed over from a source cell to a target cell is allocated one or several uplink (UL) grants in the target cell for initiating communications with the target cell. In other words, the wireless device is allocated specific time-frequency resources, in the target cell, where it can perform uplink transmissions to the target cell. As part of the handover process, the wireless device in such a RACH-less handover procedure will transmit a so-called Handover Complete message (*RRCConnectionReconfigurationComplete* message) in the granted uplink resource, without first performing a RACH procedure in order to get, among other things, an uplink grant.

By agreement in 3GPP (see 3GPP document R2-165269), this RACH-less handover procedure is restricted to the cases where: the target cell and the source cell belong to the same base station (referred to as an eNodeB, or eNB, in 3GPP documentation), in which case the Timing Advance (TA) value is considered to be the same for both cells; or the TA value for the UE in the target cell is considered known, e.g., if the target cell is so small that TA is always 0. In the latter case, the target cell and the source cell may belong to different eNBs, i.e., to a target eNB and a

source eNB, respectively. In the first case, the same eNB is both the target eNB and the source eNB.

It has been proposed, for the RACH-less handover procedure (see, e.g., 3GPP document R2-165781), to let the target eNB transmit the uplink grants for the target cell to the UE in the HO Command message, which is transmitted to the UE in the source cell. It has also been proposed to let the UE use the RACH procedure after a specified time if the RACH-less HO procedure does not work for some reason. It has then been proposed to let that point in time be based on the time that the UE has synchronized to the target cell. For the UE, then, the validity of the allocated UL grants in the RACH-less HO procedure is therefore based on the point in time that the UE successfully performs its synchronization to the target cell.

The HO Command message (in LTE) typically consists of an *RRCConnectionReconfiguration* message, including a *MobilityControlInfo* information element.

One requirement for RACH-less HO is that the UE does not need to read a System Frame Number (SFN) in the target cell. In that way, the UE is not mandated to read the target cell's Master Information Block (MIB). This is considered to further speed up the HO.

Some prior art examples of communication systems and methods for handover procedures are disclosed in US 2014/0161100, WO 2015/127987, WO 2010/002692, and the 3GPP document R2-162517 with title "Consideration on RACH-less handover".

### SUMMARY

One problem with current proposals for RACH-less Handover (HO) involves the proposal to let the validity timer for the RACH-less procedure in the target cell be based on when the wireless device (e.g., UE) has synchronized to the target cell. A problem with this approach is that the target eNB does not know when the UE has succeeded in synchronizing to the target cell. When the target eNB constructs the HO Command message that includes the target cell uplink grants, it does not know when the UE will be triggered to start the handover procedure, i.e., when the UE will successfully receive the HO Command message in the source cell. Furthermore, it does not know how long it will take for the UE to perform the synchronization procedure towards the target cell.

A result of this problem is that there will in some cases be a misalignment, between the target eNB and the UE, regarding exactly when the UL grants are valid in the target cell and thus when the UE should stop using the RACH-less HO procedure and fallback to the RACH procedure. In the event that the timeout occurs in the target eNB before it occurs in the UE, the UE will perform the RACH procedure at a later point in time than expected by the target eNB, which increases the delay during the handover procedure. Since the UE in this scenario may consider uplink grants to be valid for a longer time than what the target eNB's allocation was actually intended to cover, the UE may perform transmissions at occasions allocated to other UEs, for

example. That would lead to increased interference for other UEs that have been allocated the uplink resources and may thus lead to disturbances for other traffic in the same cell.

In the alternative event that the timeout instead occurs in the UE before it occurs in the target eNB, the UE may initiate the RACH procedure early, at a time when there are still uplink grants allocated for the UE in the cell, which thus would be wasted. The UE may in some cases even consider all of the allocated uplink grants in the target cell to have timed out (i.e., not be valid anymore) and thereby completely fail to use the RACH-less handover procedure even though the target eNB is still expecting the HO Complete message to be transmitted according to that procedure.

The several techniques and apparatuses described in detail herein address some or all of these problems. According to at least some of these techniques, uplink grants for the target cell (for transmission of the HO Complete message) are included in the HO Command message that is sent to the wireless device in the source cell, where the validity timer for the uplink grants in the target cell are based on SFN (System Frame Number) values in the source cell. After a certain time, which is based on the SFN values in the source cell, a fallback to using the RACH procedure in the target cell is used by the wireless device. According to some embodiments, the target eNB indicates to the UE (via the HO Command sent by the source cell) whether or not the timer for uplink grant validity in the target cell shall be based on the SFN from the source cell.

Implementations of the disclosed techniques may be used to enable the UE and the target eNB, during a RACH-less handover procedure, to be aligned regarding when the uplink grants in the target cell are allocated, and for how long they are valid, so that the UE can determine when it should perform the RACH procedure as a fallback solution. These techniques may thus be used to avoid unwanted increases of the delay during the RACH-less handover procedure, as well as to avoid that the UE performs transmissions in the target cell at occasions where it has not been allocated uplink resources, thereby avoiding disturbed traffic in the target cell. Furthermore, by letting the uplink grants be based on the source cell SFN values, the UE is not required to read the SFN of the target cell to determine when the UL grants are valid. To determine the SFN of the target cell, the UE would otherwise need to read the MIB in the target cell.

The invention is defined by the subject-matter of the independent claims. Preferred embodiments are defined in the dependent claims.

### BRIEF DESCRIPTION OF THE FIGURES

Figure 1 is a signal flow diagram illustrating an example RACH-less handover (HO) procedure according to some embodiments of the presently disclosed techniques.
Figure 2 is a signal flow diagram illustrating another example RACH-less handover (HO) procedure according to some embodiments of the presently disclosed techniques.
Figure 3 is a block diagram illustrating an example base station.
Figure 4 is a process flow diagram illustrating an example method according to some embodiments, as carried out in a source base station.
Figure 5 is a process flow diagram illustrating an example method according to some embodiments, as carried out in a target base station.
Figure 6 is a block diagram illustrating an example wireless device.
Figure 7 is a process flow diagram illustrating an example method according to some embodiments, as carried out in a wireless device.
Figure 8 is a block diagram illustrating a functional representation of an example source base station.
Figure 9 is a block diagram illustrating a functional representation of an example target base station.
Figure 10 is a block diagram illustrating a functional representation of an example wireless device.

### DETAILED DESCRIPTION

The presently disclosed techniques are described in the context of improvements to the LTE wireless communications standards. It will be appreciated, however, that the techniques are more generally applicable to other wireless communications networks where handovers of wireless devices are performed. The terms "user equipment" or "UE" are used herein for convenience, as these are commonly used in 3GPP documentation. For the purpose of understanding the scope of the presently disclosed techniques and apparatuses, however, these terms should be understood more generally, as referring to wireless devices configured to operate as access terminals in a wireless communication network, whether those wireless devices are consumer-oriented devices such as cellular telephones, smartphones, wireless-equipped laptops, tablets, or the like, or machine-to-machine (M2M) devices for use in industrial applications or in enabling the Internet of Things (loT). Likewise, the terms eNB and eNodeB, as used herein, should be understood to refer generally to base stations or wireless access nodes in a wireless communications system.

As discussed above, a problem with current proposals for RACH-less handover (HO) involves the proposal to let the validity timer for the RACH-less procedure in the target cell be based on when the UE has synchronized to the target cell. A problem with this approach is that the target eNB does not know when the UE has succeeded in synchronizing to the target cell. When the target eNB constructs the HO Command message that includes the target cell uplink grants, it does not know when the UE will be triggered to start the handover procedure, i.e., when the UE will successfully receive the HO Command message in the source cell. Furthermore, it does not know how long it will take for the UE to perform the synchronization procedure towards the target cell. This means that, using the currently proposed techniques, there will in some cases be a misalignment between the target eNB and the UE, regarding exactly when the UL grants are valid in the target cell and thus exactly when the UE should stop using the RACH-less HO procedure and fallback to the RACH procedure.

According to some of the presently disclosed techniques, uplink grants for the target cell, for transmission of the HO Complete message, are included in the HO Command message that is sent to the UE in the source cell, where the validity timer for the UL grants in the target cell is based on the SFN (System Frame Number) values in the source cell. The SFN in the source cell is already known by the UE at the point in time where the handover takes place. After a certain time, which is based on the SFN values in the source cell, a fallback to using the RACH procedure in the target shall be used by the UE.

More particularly, in some embodiments, the target eNodeB constructs the so-called HO Command message (the RRC message *RRCConnectionReconfiguration,* including a *MobilityControlInfo* information element) and sends it to the source eNodeB as a transparent container. The source eNodeB then transmits that message (built by the target eNodeB) to the UE. With the RACH-less HO, the HO Command message shall contain UL grants for the target cell. According to the techniques described herein, the HO Command includes information about the validity of the UL grants and/or when a fallback shall be used instead of the RACH-less procedure, which is based on the source cell SFN or target cell SFN in the HO Command message. In the latter case, offset information is also included, so that the UE can determine the timing for the grants and/or for when the fallback procedure should be used based on SFNs for the source cell, which are known to the wireless device, without having to obtain SFNs from the target cell.

When the source cell and the target cell belong to the same eNB, the two cells are normally synchronized. The SFN values for the two cells, however, are not necessarily aligned between the two cells. The same applies when the two cells do not belong to the same eNB, where the cells may be synchronized but the SFN values are not aligned. In some embodiments of the presently disclosed techniques, the difference between the SFN values in the two cells may be made available to the target eNB, so that it can determine the validity period of the uplink grants with respect to the SFN in the source cell. The target eNB can then indicate the validity of the uplink grants in the target cell (possibly including when they take place/are allocated) with reference to the SFN values of the source cell. This can be communicated to the UE in the HO Command message, which is created by the target eNB and forwarded to the source eNB (if different from the target eNB) for transmission to the wireless device in the source cell. The UE then receives validity information that is interpreted with reference to SFN values, which it can assume to refer to the SFN values corresponding to the source cell. For the purposes of the handover procedure, the UE may assume that the target cell has the same SFN values as the source cell, when calculating the position and validity of the uplink grants for the RACH-less handover procedure.

More particularly, in some embodiments of the presently disclosed, the validity of the uplink grant in the target cell, including the point in time for when the UE should fallback to use the RACH procedure, are indicated to the UE in terms of source cell SFN values. During the handover procedure, the UE then assumes that the validity timers for the uplink grants in the target cell, as well as the timer value for when the fallback RACH procedure shall be used instead of the RACH-less handover procedure, are based on that the SFN values are the same in the source cell and the target cell. In case the SFN values then are not aligned in the source and target cells at the handover, the target eNB in these embodiments calculates the difference in SFN values between the two cells and sets the validity timers for the RACH-less handover procedure as the corresponding SFN values in the source cell.

As an alternative, an offset value ("SFN offset") specifying the difference between the SFN values in the source cell and the target cell can be included in the HO Command message. The uplink grants of the target cell in these embodiments can then be indicated as SFN values in the target cell, which the UE thus can determine through the SFN in the source cell and the received "SFN offset" value. The SFN offset value gives the difference in SFN values between the source cell and the target cell: SFN offset = SFN (target cell) - SFN (source cell).

The HO Command message in these embodiments then includes the SFN offset value and the position and validity of the uplink grants for the RACH-less handover procedure, given as target cell SFN value(s). The UE may then use the SFN offset value in the message and the source cell SFN value, which is already known to the UE, to calculate the target cell SFN value during the handover. The UE may thus correctly determine the position and validity of the UL grants for the RACH-less handover, given as target cell SFN values, even without reading the MIB in the target cell. Note that in the event the SFN values are aligned between the target cell and the source cell, the "SFN offset" value would thus be set to 0, in these embodiments.

In addition to using the validity information provided in the HO Command for determining the validity of uplink grants in the target cell, with reference to SFN values in the source cell, the UE may also use this information to determine when it should fall back to the RACH procedure in the target cell.

As an addition, the target eNB may, in some embodiments, indicate (in the HO Command message, which is ultimately sent in the serving cell) to the UE whether or not the source cell SFN should be used to determine the validity of the target cell UL grants or not. As an option, if the UE should not use the source cell SFN value, it may be directed by the target eNB to instead first detect the SFN values in the target cell, e.g., by reading the MIB (*MasterInformationBlock)* of the target cell.

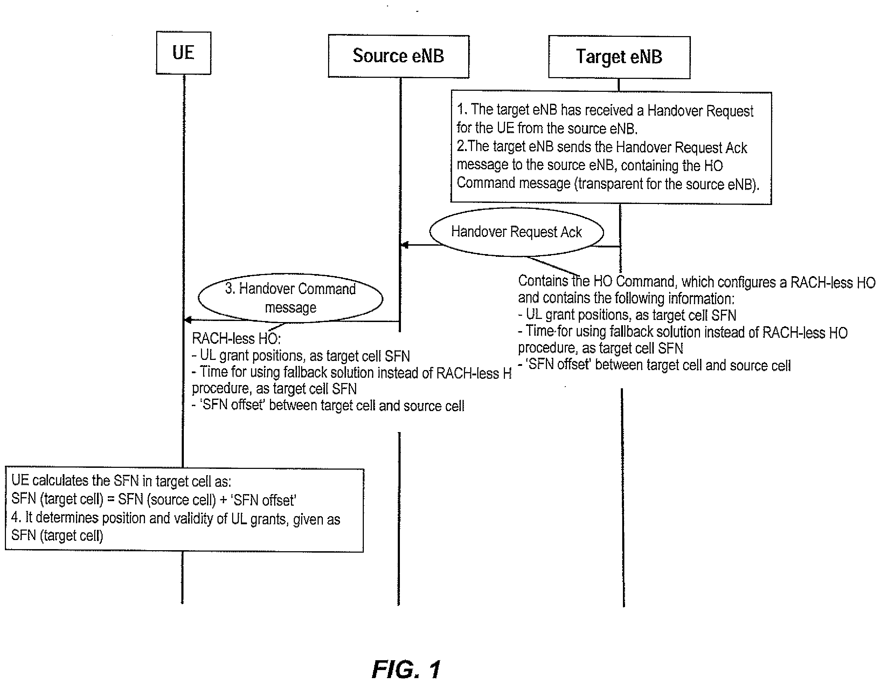

Figure 1 is a signaling flow diagram illustrating an example procedure in which the validity time for the uplink grants and the time for falling back to a RACH procedure are indicated to the UE in terms of the target cell SFNs, but with a SFN offset between the target cell SFNs and the source cell SFNs also indicated to the UE. As shown at step 1, the target eNB in this example scenario has received a Handover Request for the UE from the source eNB. As shown at step 2, the target eNB then sends a Handover Request Ack message to the source eNB, including a HO Command message for transmission to the UE in the source cell. This HO Command message is transparent to the source eNB.

The HO Command in this example configures a RACH-less HO by the UE, to the target cell, and includes uplink grant information specifying one or more positions (i.e., time-frequency resources) for uplink transmission on the target cell, as well as a time for using the fallback solution for accessing the target cell, in the event that the RACH-less HO procedure is unsuccessful and/or the uplink grants cannot be successfully used. In this example, the uplink grant information and the indicated time for using the fallback solution are specified with respect to the SFNs for the target cell, rather than those for the source cell. The HO Command thus further includes an indicator of an SFN offset between the SFNs for the source cell and the SFNs for the target cell. As an alternative, in some embodiments this indicator might instead indicate that the SFNs can be assumed to be the same.

As shown at step 3, the HO Command message is subsequently transmitted to the UE by the source eNB, in the source cell, to which the UE is currently connected. In some embodiments, the message is transmitted in a transparent manner by the source eNB, such that the source eNB simply transmits the message as sent to it by the target eNB, in a message "container." In any event, the HO Command message transmitted in the source cell in this example includes the information specified above, i.e., uplink grant information specifying one or more positions for uplink transmission on the target cell, a time for using the fallback solution for accessing the target cell, and an indicator of an SFN offset between the SFNs of the target cell and source cell.

Finally, as shown at step 4, the UE, having received the HO Command, determines the times for the uplink grants and the validity time, i.e., the time at which the fallback solution should be used instead, using the SFNs for the source cell as reference times, thus avoiding any need to read the MIB from the target cell to determine the target cell SFNs. As shown in Figure 1, this can be done using the relationship: *SFN(target cell) = SFN(source cell)* + *'SFN offset'.*

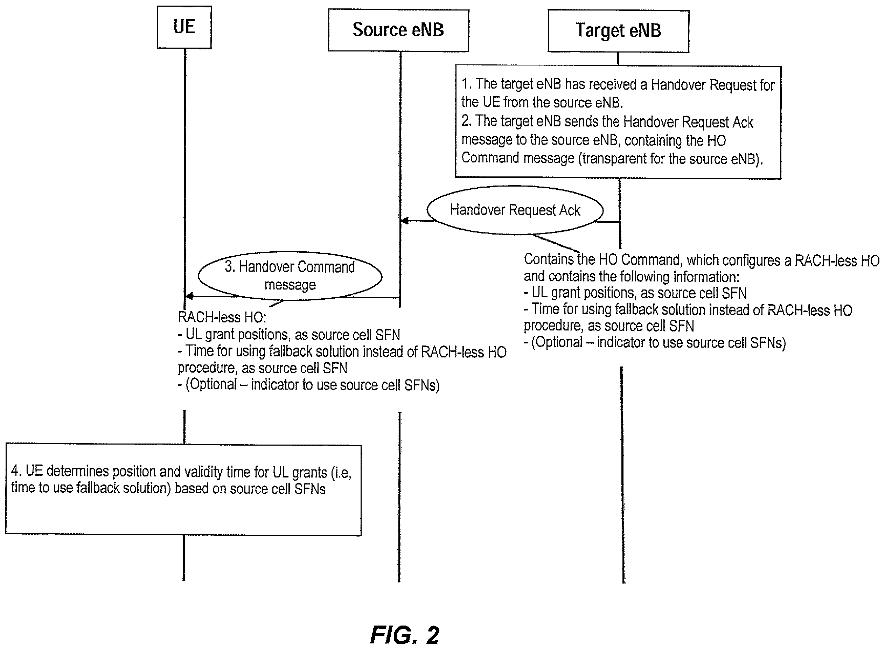

Since the UE is currently tracking system time with respect to source cell SFNs, it can apply the SFN offset to the grant times and validity times, specified in terms of target cell SFNs, to determine the grant times and validity times with respect to source cell SFNs, and vice versa. In Figure 2, it is shown that source cell SFNs may be indicated in the HO Request Ack and/or HO Command message, as an option, where the UE determines position and validity time for UL grants based on source cell SFNs.

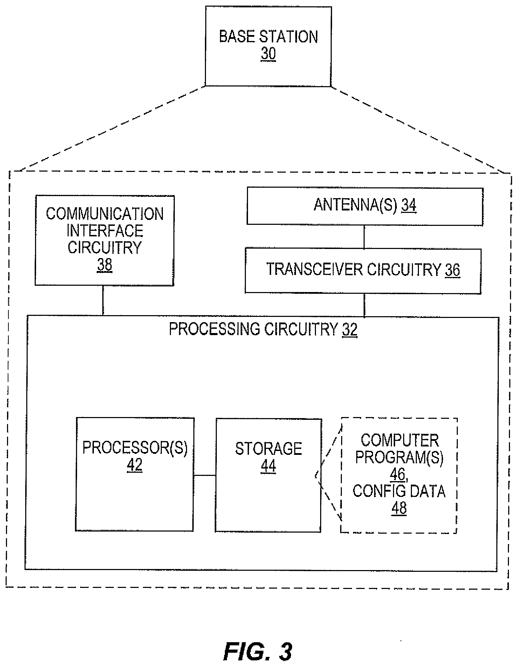

In view of the examples described above and illustrated in Figures 1 and 2, Figure 3 is a block diagram illustrating an example base station 30, which may be configured to operate as either the target base station or the source base station, as described above, or as both. The base station 30 may be, for example, an LTE eNodeB. The base station 30 provides an air interface to a wireless device, e.g., an LTE or 5G air interface or WLAN air interface for downlink transmission and uplink reception, which is implemented via antennas 34 and transceiver circuitry 36. The transceiver circuitry 36 includes transmitter circuits, receiver circuits, and associated control circuits that are collectively configured to transmit and receive signals according to a radio access technology, for the purposes of providing cellular communication, or WLAN services if necessary. According to various embodiments, cellular communication services may be operated according to any one or more of the 3GPP cellular standards, GSM, GPRS, WCDMA, HSDPA, LTE, LTE-Advanced and 5G. The base station 30 also include communication interface circuitry 38 for communicating with nodes in the core network, other peer radio nodes, and/or other types of nodes in the network.

The base station 30 also includes one or more processing circuits 32 that are operatively associated with and configured to control the communication interface circuitry 38 and/or the transceiver circuitry 36. The processing circuitry 32 comprises one or more digital processors 42, e.g., one or more microprocessors, microcontrollers, Digital Signal Processors (DSPs), Field Programmable Gate Arrays (FPGAs), Complex Programmable Logic Devices (CPLDs), Application Specific Integrated Circuits (ASICs), or any combination thereof. More generally, the processing circuitry 32 may comprise fixed circuitry, or programmable circuitry that is specially configured via the execution of program instructions implementing the functionality taught herein, or may comprise some combination of fixed and programmable circuitry. The processor(s) 42 may be multi-core.

The processing circuitry 32 also includes a memory 44. The memory 44, in some embodiments, stores one or more computer programs 46 and, optionally, configuration data 48. The memory 44 provides non-transitory storage for the computer program 46 and it may comprise one or more types of computer-readable media, such as disk storage, solid-state memory storage, or any combination thereof. By way of non-limiting example, the memory 44 may comprise any one or more of SRAM, DRAM, EEPROM, and FLASH memory, which may be in the processing circuitry 32 and/or separate from the processing circuitry 32. In general, the memory 44 comprises one or more types of computer-readable storage media providing non-transitory storage of the computer program 46 and any configuration data 48 used by the base station 30. Here, "non-transitory" means permanent, semi-permanent, or at least temporarily persistent storage and encompasses both long-term storage in non-volatile memory and storage in working memory, e.g., for program execution.

In some embodiments, the base station 30 is configured to operate as a source base station configured to perform handover of a wireless device from a source cell served by the source base station to a target cell served by a target base station, according to one or more of the techniques described herein. Accordingly, in some embodiments, the processing circuitry 32 of the base station 30 is configured to obtain a command for transmission to the wireless device, the command comprising configuration information that comprises an indication of at least one uplink grant time for uplink resources in the target cell, specified in terms of at least one SFN value, and to transmit the command to the wireless device, where the configuration information in the command comprises information sufficient to enable the wireless device to determine a time or times for accessing uplink resources in the target cell without obtaining SFN values from the target cell. As discussed above, this command may be a handover command for a RACH-less handover of the wireless device 50 to the target cell.

The processing circuitry 32 is also configured to perform a corresponding method 400 in a source base station for performing handover of a wireless device from a source cell served by the source base station to a target cell served by a target base station. The method 400 includes obtaining a command for transmission to the wireless device, the command comprising configuration information that comprises an indication of at least one uplink grant time for uplink resources in the target cell, specified in terms of at least one SFN value (block 402). The method 400 further comprises transmitting the command to the wireless device (block 404). Importantly, the configuration information in the command comprises information sufficient to enable the wireless device to determine a time or times for accessing uplink resources in the target cell without obtaining SFN values from the target cell. Once again, as discussed above, this command may be a handover command for a RACH-less handover of the wireless device 50 to the target cell.

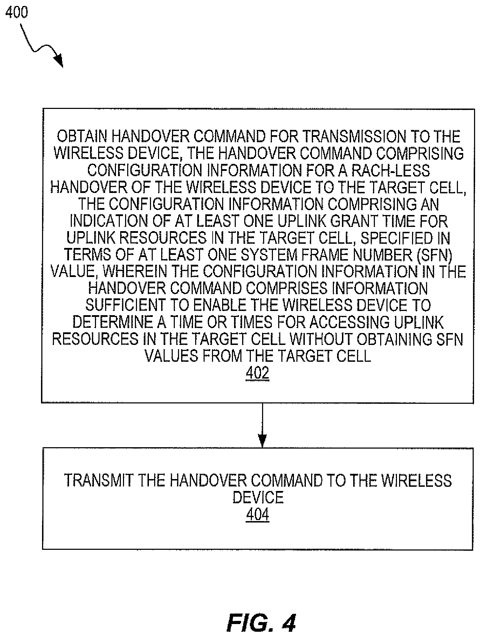

There are two major variants of the process shown in Figure 4, corresponding generally to the techniques shown in Figures 1 and 2. According to one variant (Figure 1), the at least one uplink grant time is specified in terms of a first SFN value for the target cell, and the configuration information further includes an SFN offset value indicating a difference between SFN values for the source cell and contemporaneous SFN values for the target cell, such that the wireless device can determine the time or times for accessing uplink resources in the target cell in terms of SFN values for the source cell, by applying the SFN offset value to the first SFN value for the target cell. The term "contemporaneous" is used here to refer to SFN values for the target cell and source cell that correspond to respective frames in the target and source cells that are overlapping time, if not simultaneous (synchronized). In some embodiments, according to this first variant, the configuration information further comprises an indication of a time at which a fallback procedure to a random access channel (RACH) procedure for accessing the target cell should be initiated by the wireless device, specified in terms of a second SFN value for the target cell. Thus, the wireless device can determine a time for initiating the fallback, in terms of SFN values for the source cell, by applying the SFN offset to the second SFN value.

According to another variant (Figure 2), the at least one SFN value included in the configuration information is specified in terms of an SFN value for the source cell, such that no additional information is needed to enable the wireless device to determine the time or times for accessing uplink resources in the target cell in terms of SFN values for the source cell. This can be done without obtaining SFN values from the target cell, e.g., by reading the MIB transmitted by the target. In a second version of this second variant, the at least one SFN value is similarly specified in terms of an SFN value for the source cell, but the configuration information further includes an explicit indication that the at least one uplink grant is specified in terms of an SFN value for the source cell. With this explicit indication, the wireless device is alerted that the times are indicated in terms of SFN values for the source cell, such that it need not obtain SFNs for the target cell. In some embodiments, according to either version of this second variant, the configuration information further comprises an indication of a time at which a fallback procedure to a random access channel (RACH) procedure for accessing the target cell should be initiated by the wireless device, specified in terms of a SFN value for the source cell.

In some embodiments of the method 400 shown in Figure 4, obtaining the command comprises receiving the command from a (separate) target base station serving the source cell. In other embodiments, the source base station is also the target base station, and obtaining the command comprises forming the command.

In some embodiments, the base station 30 is configured to operate as the target base station that is configured to perform handover of a wireless device from a source cell served by the source base station to a target cell served by the target base station, according to one or more of the techniques described herein. Accordingly, in some embodiments, the processing circuitry 32 of the base station 30 is configured to form a command for transmission to the wireless device, the command comprising configuration information that comprises an indication of at least one uplink grant time for uplink resources in the target cell, specified in terms of at least one SFN value. The configuration information in the command comprises information sufficient to enable the wireless device to determine a time or times for accessing uplink resources in the target cell without obtaining SFN values from the target cell. In some embodiments, e.g., where the source base station and the target base station are separate nodes, the processing circuitry 32 is further configured to send the command to the source base station for transmission to the wireless device. In other embodiments, where the source base station and target base station are the same node, the processing circuitry 32 is further configured to transmit the command to the wireless device.

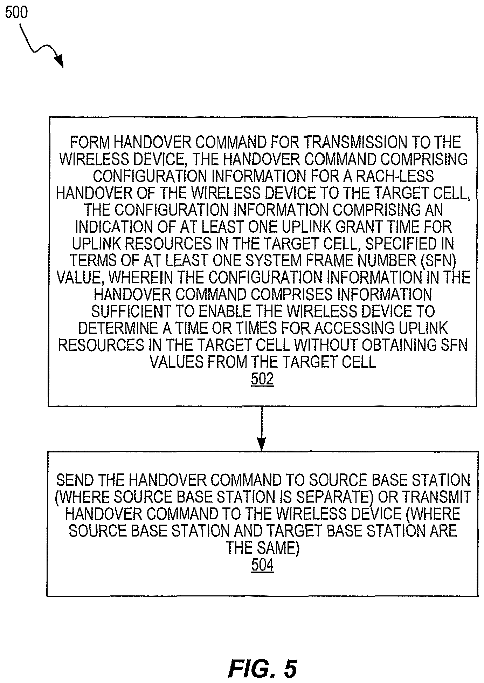

Figure 5 is a process flow illustrating a corresponding method 500 implemented in the target base station. As seen at block 502, the method 500 includes forming a command for transmission to the wireless device, the command comprising configuration information that comprises an indication of at least one uplink grant time for uplink resources in the target cell, specified in terms of at least one SFN value. The configuration information in the command comprises information sufficient to enable the wireless device to determine a time or times for accessing uplink resources in the target cell without obtaining SFN values from the target cell. As seen at block 504, the method 500 may further include either sending the command to the (separate) source base station for transmission to the wireless device or, in the event that the target base station is also the source base station, transmitting the command to the wireless device.

As was the case with the method 400 illustrated in Figure 4, there are two major variants of the method 500 shown in Figure 5. In a first variant, the at least one uplink grant time is specified in terms of a first SFN value for the target cell, and the configuration information further includes an SFN offset value indicating a difference between SFN values for the source cell and contemporaneous SFN values for the target cell, such that the wireless device can determine the time or times for accessing uplink resources in the target cell in terms of SFN values for the source cell, by applying the SFN offset value to the first SFN value for the target cell. In some embodiments according to this variant, the configuration information further comprises an indication of a time at which a fallback procedure to a random access channel (RACH) procedure for accessing the target cell should be initiated by the wireless device, specified in terms of a SFN value for the target cell. In some of these and in some other embodiments, the method 500 further comprises reserving uplink resources in the target cell for the wireless device, in accordance with the indicated at least one uplink grant time.

In a second variant of the method 500 shown in Figure 5, the at least one SFN value is specified in terms of an SFN value for the source cell, such that no additional information is needed to enable the wireless device to determine the time or times for accessing uplink resources in the target cell in terms of SFN values for the source cell, without obtaining SFN values from the target cell. In a slightly different version of this second variant, the at least one SFN value is similarly specified in terms of an SFN value for the source cell, but the configuration information further includes an explicit indication that the at least one uplink grant is specified in terms of an SFN value for the source cell. In some embodiments, according to either version of this second variant, the method 500 further comprises, in the target base station, determining the SFN value for the source cell based on a SFN value for the target cell and corresponding to the uplink grant time, and based on an SFN offset indicating a difference between SFN values for the source cell and contemporaneous SFN values for the target cell. In some of these and in some other embodiments, the configuration information further comprises an indication of a time at which a fallback procedure to a random access channel (RACH) procedure for accessing the target cell should be initiated by the wireless device, specified in terms of a SFN value for the source cell.

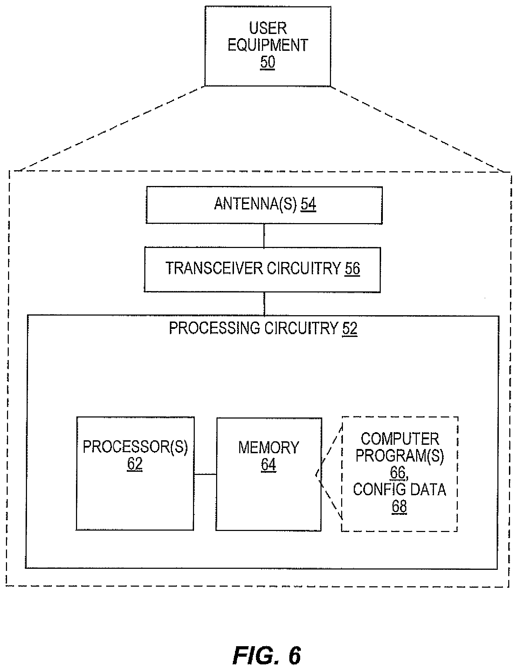

Figure 6 illustrates an example wireless device, referred to as user equipment (UE) 50 in Figure 6, that is configured to perform the techniques described herein for the wireless device. The UE 50 may also be considered to represent any wireless devices that may operate in a network or are capable of communicating with a network node or another UE over radio signals. The UE 50 may also be referred to, in various contexts, as a radio communication device, a target device, a device-to-device (D2D) UE, a machine-type UE or UE capable of machine to machine (M2M) communication, a sensor-equipped UE, a PDA (personal digital assistant), a wireless tablet, a mobile terminal, a smart phone, laptop-embedded equipment (LEE), laptop-mounted equipment (LME), a wireless USB dongle, a Customer Premises Equipment (CPE), etc.

The UE 50 communicates with one or more radio nodes or base stations, such as one or more network nodes 30, via antennas 54 and a transceiver circuitry 56. The transceiver circuitry 56 may include transmitter circuits, receiver circuits, and associated control circuits that are collectively configured to transmit and receive signals according to a radio access technology, for the purposes of providing cellular communication services.

The UE 50 also includes one or more processing circuits 52 that are operatively associated with and control the radio transceiver circuitry 56. The processing circuitry 52 comprises one or more digital processing circuits, e.g., one or more microprocessors, microcontrollers, DSPs, FPGAs, CPLDs, ASICs, or any mix thereof. More generally, the processing circuitry 52 may comprise fixed circuitry, or programmable circuitry that is specially adapted via the execution of program instructions implementing the functionality taught herein, or may comprise some mix of fixed and programmed circuitry. The processing circuitry 52 may be multi-core.

The processing circuitry 52 also includes a memory 64. The memory 64, in some embodiments, stores one or more computer programs 66 and, optionally, configuration data 68. The memory 64 provides non-transitory storage for the computer program 66 and it may comprise one or more types of computer-readable media, such as disk storage, solid-state memory storage, or any mix thereof. By way of non-limiting example, the memory 64 comprises any one or more of SRAM, DRAM, EEPROM, and FLASH memory, which may be in the processing circuitry 52 and/or separate from processing circuitry 52. In general, the memory 64 comprises one or more types of computer-readable storage media providing non-transitory storage of the computer program 66 and any configuration data 68 used by the UE 50.

Accordingly, in some embodiments, the processing circuitry 52 of the wireless device (UE 50) is configured to receive a command from a serving cell serving the wireless device, the command comprising configuration information that comprises an indication of at least one uplink grant time for uplink resources in the target cell, specified in terms of at least one SFN value for either the source cell or the target cell. The processing circuitry 52 is further configured to determine a time or times corresponding to the at least one uplink grant time, in terms of SFN values for the source cell, based on the indication of the at least one uplink grant time, and to initiate a transmission to the target cell, based on the determined time or times. Once again, as discussed above, this command may be a handover command for a RACH-less handover of the wireless device 50 to the target cell; the transmission to the target cell may thus be a RACH-less access to the target cell.

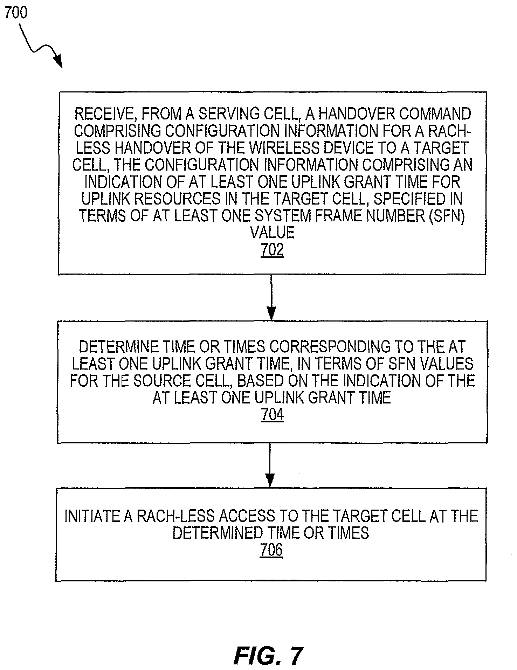

Figure 7 is a process flow diagram illustrating a corresponding method 700 implemented in a wireless device, such as UE 50, the wireless device initially being served by a serving cell in a wireless communication system. As shown at block 702, the method 700 includes receiving, from the serving cell, a command, the command comprising configuration information that comprises an indication of at least one uplink grant time for uplink resources in the target cell, specified in terms of at least one SFN value for either the source cell or the target cell. As shown at block 704, the method 700 further includes determining a time or times corresponding to the at least one uplink grant time, in terms of SFN values for the source cell, based on the indication of the at least one uplink grant time. As shown at block 706, the method 700 further comprises initiating a transmission, e.g., a RACH-less access, to the target cell, based on the determined time or times. This means attempting to access the target cell by transmitting at the determined time or times, without first performing a random access procedure with the target cell.

In some embodiments of the method 700 shown in Figure 7, the at least one uplink grant time is specified in terms of a first SFN value for the target cell, where the configuration information further includes an SFN offset value indicating a difference between SFN values for the source cell and contemporaneous SFN values for the target cell. In these embodiments, determining the time or times corresponding to the at least one uplink grant time comprises applying the SFN offset value to the first SFN value for the target cell. In some of these embodiments. The configuration information further comprises an indication of a time at which a fallback procedure to a random access channel (RACH) procedure for accessing the target cell should be initiated by the wireless device, specified in terms of a second SFN value for the target cell. The method 700 further comprises determining a time for initiating the fallback in terms of an SFN value for the source cell, by applying the SFN offset value to the second SFN value. In some of these later embodiments, the method further comprises, in response to a failure to successfully access the target cell at the determined time or times, initiating a random access procedure towards the target cell, beginning at the determined time for initiating the fallback.

In other embodiments, the at least one SFN value is specified in terms of an SFN value for the source cell, wherein the method 700 comprises determining the time or times directly from the SFN value for the source cell, without obtaining SFN values from the target cell. In a different version of this second major variant of the method 700 illustrated in Figure 7, the at least one SFN value is similarly specified in terms of an SFN value for the source cell, but the configuration information further includes an explicit indication that the at least one uplink grant is specified in terms of an SFN value for the source cell. In this different version, the method 700 likewise comprises determining the time or times directly from the SFN value for the source cell, without obtaining SFN values from the target cell, responsive to the explicit indication.

In some embodiments, the configuration information further comprises an indication of a time at which a fallback procedure to a random access channel (RACH) procedure for accessing the target cell should be initiated by the wireless device, specified in terms of a SFN value for the source cell. The method 700 further comprises, in response to a failure to successfully access the target cell at the determined time or times, initiating a random access procedure towards the target cell, beginning at the indicated time.

As discussed in detail above, the techniques described herein, e.g., as illustrated in the process flow diagrams of Figures 4, 5, and 7, may be implemented, in whole or in part, using computer program instructions executed by one or more processors. It will be appreciated that a functional implementation of these techniques may be represented in terms of functional modules, where each functional module corresponds to a functional unit of software executing in an appropriate processor or to a functional digital hardware circuit, or some combination of both.

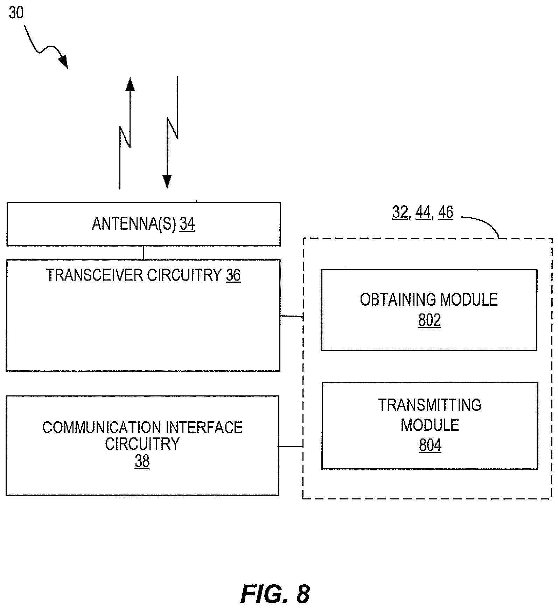

Figure 8 illustrates an example functional module or circuit architecture as may be implemented in a base station 30 operating as a source base station. The implementation includes an obtaining module 802 for obtaining a command for transmission to the wireless device, e.g., a handover command for a RACH-less handover of the wireless device (50) to the target cell, the command comprising configuration information that comprises an indication of at least one uplink grant time for uplink resources in the target cell, specified in terms of at least one SFN value. The implementation further includes a transmitting module 804 for transmitting the command to the wireless device, via the transceiver circuitry. As discussed in detail above, the configuration information in the command comprises information sufficient to enable the wireless device to determine a time or times for accessing uplink resources in the target cell without obtaining SFN values from the target cell.

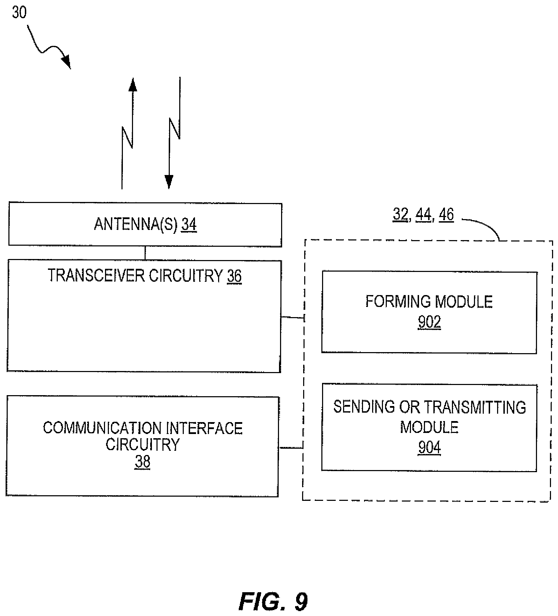

Figure 9 illustrates an example functional module or circuit architecture as may be implemented in a base station 30 operating as a target node. The implementation includes a forming module 902 for forming a command for transmission to the wireless device, e.g., a handover command for a RACH-less handover of the wireless device (50) to the target cell, the command comprising configuration information that comprises an indication of at least one uplink grant time for uplink resources in the target cell, specified in terms of at least one SFN value. The implementation further includes a sending or transmitting module 904 for either sending the command to the source base station, in the event that the target base station 30 and the source base station are different, or for transmitting the command to the wireless device, in the event that the target base station 30 and the source base station are the same. Again, the configuration information in the command comprises information sufficient to enable the wireless device to determine a time or times for accessing uplink resources in the target cell without obtaining SFN values from the target cell.

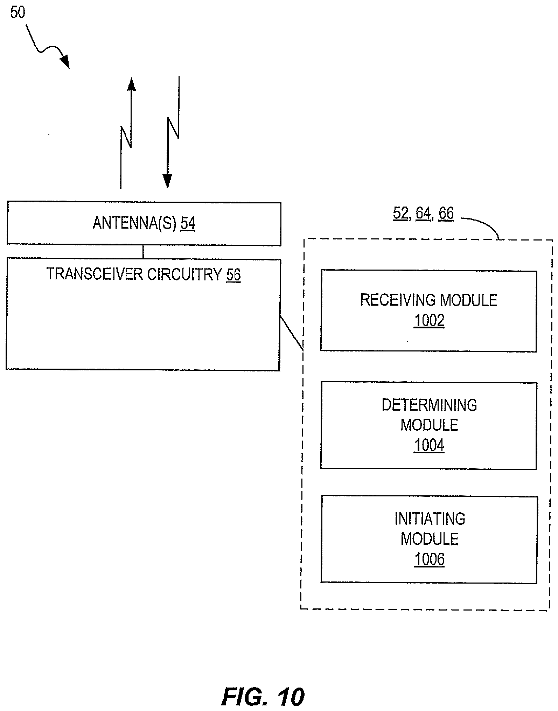

Figure 10 illustrates an example functional module or circuit architecture as may be implemented in a wireless device, such as UE 50. The implementation includes a receiving module 1002 for receiving a command from a serving cell serving the wireless device, e.g., a handover command for a RACH-less handover of the wireless device (50) to the target cell, the command comprising configuration information that comprises an indication of at least one uplink grant time for uplink resources in the target cell, specified in terms of at least one SFN value for either the source cell or the target cell. The implementation further includes a determining module 1004 for determining a time or times corresponding to the at least one uplink grant time, in terms of SFN values for the source cell, based on the indication of the at least one uplink grant time, as well as an initiating module 1006 for initiating a transmission, e.g., a RACH-less access, to the target cell, based on the determined time or times.

## Claims

1. A method (400), performed by a source base station (30), for handover of a wireless device (50) from a source cell served by the source base station (30) to a target cell served by a target base station, the method (400) comprising:
receiving (402), from the target base station, a handover command for a random access channel-less, RACH-less, handover of the wireless device (50) to the target cell, the command comprising configuration information about times for uplink grants in the target cell and a validity time for the uplink grants, the validity time specified in terms of a System Frame Number, SFN, value of the source cell or the target cell, said validity time indicating a time at which a fallback to a random access channel, RACH, procedure for accessing the target cell should be initiated by the wireless device (50); and
transmitting (404) the handover command to the wireless device (50).

2. The method (400) of claim 1, wherein the validity time is specified in terms of an SFN value for the target cell, and wherein the configuration information further includes an SFN offset value indicating a difference between SFN values for the source cell and contemporaneous SFN values for the target cell

3. A method (500), performed by a target base station (30), for handover of a wireless device (50) from a source cell served by the source base station to a target cell served by the target base station (30), the method (500) comprising:
forming (502) a handover command for a random access channel-less, RACH-less, handover of the wireless device (50) to the target cell, the command comprising configuration information about times for uplink grants in the target cell and a validity time for the uplink grants, the validity time specified in terms of a System Frame Number, SFN, value of the source cell or the target cell, said validity time indicating a time at which a fallback to a random access channel, RACH, procedure for accessing the target cell should be initiated by the wireless device (50);
sending (404) the handover command to the source base station for transmission to the wireless device (50).

4. The method (500) of claim 3, wherein the validity time is specified in terms of an SFN value for the target cell, and wherein the configuration information further includes an SFN offset value indicating a difference between SFN values for the source cell and contemporaneous SFN values for the target cell.

5. The method (500) of claim 3, wherein the method (500) further comprises , determining the SFN value for the source cell based on a SFN value for the target cell and corresponding to the validity time, and based on an SFN offset indicating a difference between SFN values for the source cell and contemporaneous SFN values for the target cell.

6. A method (700), performed by a wireless device (50), for handover of said wireless device (50) from a source cell to a target cell in a wireless communication system, the method (700) comprising:
receiving (702), from the serving cell, a handover command for a random access channel-less, RACH-less, handover of the wireless device (50) to the target cell, the handover command comprising configuration information about times for uplink, UL, grants in the target cell and a validity time for the UL grants, the validity time specified in terms of a System Frame Number, SFN, value of the source cell or the target cell;
determining (704) the validity time of the UL grants for the RACH-less handover, based on the SFN value of the source cell or the target cell, thereby determining the time at which a fallback to a random access channel, RACH, procedure for accessing the target cell should be initiated; and
initiating (706) a transmission to the target cell, based on the determined validity time of the UL grants for the RACH-less handover.

7. The method (700) of claim 6, wherein the validity time is specified in terms of a first SFN value for the target cell, wherein the configuration information further includes an SFN offset value indicating a difference between SFN values for the source cell and contemporaneous SFN values for the target cell, and wherein said determining (704) comprises applying the SFN offset value to the first SFN value for the target cell.

8. The method (700) of any of claims 6-7, wherein the at least one SFN value is specified in terms of an SFN value for the source cell, wherein the method (700) comprises determining the validity time or times directly from the SFN value for the source cell, without obtaining SFN values from the target cell.

9. A source base station (30) arranged to support handover of a wireless device (50) from a source cell served by the source base station (30) to a target cell served by a target base station, wherein the source base station (30) is adapted to:
receive, from the target base station, a handover command for a random access channel-less, RACH-less, handover of the wireless device (50) to the target cell the handover command comprising configuration information about times for uplink grants in the target cell and a validity time for the uplink grants, the validity time specified in terms of a System Frame Number, SFN, value of the source cell or the target cell, said validity time indicating a time at which a fallback to a random access channel, RACH, procedure for accessing the target cell should be initiated by the wireless device (50); and
transmit the handover command to the wireless device (50).

10. A target base station (30) arranged to support handover of a wireless device (50) from a source cell served by a source base station to a target cell served by the target base station (30), wherein the target base station (30) is adapted to:
form a handover command for a random access channel-less, RACH-less, handover of the wireless device (50) to the target cell the handover command comprising configuration information about times for uplink grants in the target cell and a validity time for the uplink grants, the validity time specified in terms of a System Frame Number, SFN, value of the source cell or the target cell, said validity time indicating a time at which a fallback to a random access channel, RACH, procedure for accessing the target cell should be initiated by the wireless device (50);
send the handover command to the source base station for transmission to the wireless device (50).

11. The target base station (30) of claim 10, wherein the target base station (30) is further adapted to carry out the method (500) of any of claims 3-5.

12. A wireless device (50) adapted for handover of said wireless device (50) from a source cell to a target cell in a wireless communication network, the wireless device (50) being adapted to:
receive, from the serving cell, a handover command for a random access channel-less, RACH-less, handover of the wireless device (50) to the target cell, the handover command comprising configuration information about times for uplink, UL, grants in the target cell and a validity time for the UL grants, the validity time specified in terms of an SFN value of the source cell or the target cell;
determine the validity time of the UL grants for the RACH-less handiover, based on a System Frame Number, SFN, value of the source cell or the target cell, thereby determining a time at which a fallback to a random access channel, RACH, procedure for accessing the target cell should be initiated; and
initiate a transmission to the target cell, based on the validity time of the UL grants for the RACH-less handover.

13. The wireless device (50) of claim 12, wherein the wireless device (50) is further adapted to carry out the method (700) according to any of claims 7-8.

14. A computer program (46) comprising computer program code configured for execution by a processor (32) in a source base station (30) configured to support handover of a wireless device (50) from a source cell served by the source base station (30) to a target cell served by a target base station, the computer program code comprising instructions configured to cause the source base station (30) to carry out the method according to any of claims 1-2.

15. A computer program (46) comprising computer program code configured for execution by a processor (32) in a target base station (30) configured to support handover of a wireless device (50) from a source cell served by a source base station to a target cell served by the target base station (30), the computer program code comprising instructions configured to cause the target base station (30) to carry out the method according to any of claims 3-5.

16. A computer program (46) comprising computer program code configured for execution by a processor (52) in a wireless device (50) operating in a wireless communication network, the computer program code comprising instructions configured to cause the wireless device (50) to carry out the method according to any of claims 6-8.

17. A computer-readable medium (44,64) comprising the computer program (46, 66) of any of claims 14-16 stored thereupon.

## Patentansprüche

1. Verfahren (400), das von einer Ursprungsbasisstation (30) durchgeführt wird, zur Weiterreichung einer drahtlosen Vorrichtung (50) von einer Ursprungszelle, die von der Ursprungsbasisstation (30) versorgt wird, an eine Zielzelle, die von einer Zielbasisstation versorgt wird, wobei das Verfahren (400) umfasst:
Empfangen (402) eines Weiterreichungsbefehls von der Zielbasisstation für eine direktzugriffskanallose, RACH-lose, Weiterreichung der drahtlosen Vorrichtung (50) an die Zielzelle, wobei der Befehl Konfigurationsinformationen über Zeiten für Uplink-Freigaben in der Zielzelle und eine Gültigkeitszeit für die Uplink-Freigaben umfasst, die Gültigkeitszeit in Bezug auf einen Systemrahmennummer-,SFN-,Wert der Ursprungszelle oder der Zielzelle spezifiziert ist, und die Gültigkeitszeit eine Zeit angibt, zu welcher ein Rückgriff auf eine Direktzugriffskanal-,RACH-,Prozedur zum Erlangen von Zugang zur Zielzelle von der drahtlosen Vorrichtung (50) initiiert werden sollte; und
Senden (404) des Weiterreichungsbefehls an die drahtlose Vorrichtung (50).

2. Verfahren (400) nach Anspruch 1, wobei die Gültigkeitszeit in Bezug auf einen FSN-Wert für die Zielzelle spezifiziert ist, und wobei die Konfigurationsinformationen ferner einen SFN-Offsetwert umfassen, der eine Differenz zwischen SFN-Werten für die Ursprungszelle und gleichzeitigen SFN-Werten für die Zielzelle angibt.

3. Verfahren (500), das von einer Zielbasisstation (30) durchgeführt wird, zur Weiterreichung einer drahtlosen Vorrichtung (50) von einer Ursprungszelle, die von der Ursprungsbasisstation versorgt wird, an eine Zielzelle, die von der Zielbasisstation (30) versorgt wird, wobei das Verfahren (500) umfasst:
Erstellen (502) eines Weiterreichungsbefehls für eine direktzugriffskanallose, RACH-lose, Weiterreichung der drahtlosen Vorrichtung (50) an die Zielzelle, wobei der Befehl Konfigurationsinformationen über Zeiten für Uplink-Freigaben in der Zielzelle und eine Gültigkeitszeit für die Uplink-Freigaben umfasst, die Gültigkeitszeit in Bezug auf einen Systemrahmennummer-,SFN-,Wert der Ursprungszelle oder der Zielzelle spezifiziert ist, und die Gültigkeitszeit eine Zeit angibt, zu welcher ein Rückgriff auf eine Direktzugriffskanal-,RACH-,Prozedur zum Erlangen von Zugang zur Zielzelle von der drahtlosen Vorrichtung (50) initiiert werden sollte;
Senden (404) des Weiterreichungsbefehls an die Ursprungsbasisstation zur Übertragung an die drahtlose Vorrichtung (50).

4. Verfahren (500) nach Anspruch 3, wobei die Gültigkeitszeit in Bezug auf einen FSN-Wert für die Zielzelle spezifiziert ist, und wobei die Konfigurationsinformationen ferner einen SFN-Offsetwert umfassen, der eine Differenz zwischen SFN-Werten für die Ursprungszelle und gleichzeitigen SFN-Werten für die Zielzelle angibt.

5. Verfahren (500) nach Anspruch 3, wobei das Verfahren (500) ferner ein Bestimmen des SFN-Werts für die Ursprungszelle basierend auf einem FSN-Wert für die Zielzelle und entsprechend der Gültigkeitszeit und basierend auf einem SFN-Offsetwert umfasst, der eine Differenz zwischen SFN-Werten für die Ursprungszelle und gleichzeitigen SFN-Werten für die Zielzelle angibt.

6. Verfahren (700), das von einer drahtlosen Vorrichtung (50) durchgeführt wird, zur Weiterreichung der drahtlosen Vorrichtung (50) von einer Ursprungszelle an eine Zielzelle in einem drahtlosen Kommunikationssystem, wobei das Verfahren (700) umfasst:
Empfangen (702) eines Weiterreichungsbefehls von der versorgenden Zelle für eine direktzugriffskanallose, RACH-lose, Weiterreichung der drahtlosen Vorrichtung (50) an die Zielzelle, wobei der Weiterreichungsbefehl Konfigurationsinformationen über Zeiten für Uplink-,UL-,Freigaben in der Zielzelle und eine Gültigkeitszeit für die UL-Freigaben umfasst, wobei die Gültigkeitszeit in Bezug auf einen Systemrahmennummer-,SFN-,Wert der Ursprungszelle oder der Zielzelle spezifiziert ist;
Bestimmen (704) der Gültigkeitszeit der UL-Freigaben für die RACH-lose Weiterreichung basierend auf dem SFN-Wert der Ursprungszelle oder der Zielzelle, um dadurch die Zeit zu bestimmen, zu welcher ein Rückgriff auf eine Direktzugriffskanal-,RACH-,Prozedur zum Erlangen von Zugang zur Zielzelle initiiert werden sollte; und
Initiieren (706) einer Übertragung an die Zielzelle basierend auf der bestimmten Gültigkeitszeit der UL-Freigaben für die RACH-lose Weiterreichung.

7. Verfahren (700) nach Anspruch 6, wobei die Gültigkeitszeit in Bezug auf einen FSN-Wert für die Zielzelle spezifiziert ist, wobei die Konfigurationsinformationen ferner einen SFN-Offsetwert umfassen, der eine Differenz zwischen SFN-Werten für die Ursprungszelle und gleichzeitigen SFN-Werten für die Zielzelle angibt, und wobei das Bestimmen (704) ein Anwenden des SFN-Offsetwerts auf den ersten SFN-Wert für die Zielzelle umfasst.

8. Verfahren (700) nach einem der Ansprüche 6 bis 7, wobei der mindestens eine SFN-Wert in Bezug auf einen SFN-Wert für die Ursprungsquelle spezifiziert ist, wobei das Verfahren (700) ein direktes Bestimmen der Gültigkeitszeit oder -zeiten aus dem SFN-Wert für die Ursprungsquelle ohne Erhalten von SFN-Werten von der Zielzelle umfasst.

9. Ursprungsbasisstation (30), die zum Unterstützen von Weiterreichung einer drahtlosen Vorrichtung (50) von einer Ursprungszelle, die von der Ursprungsbasisstation (30) versorgt wird, an eine Zielzelle ausgelegt ist, die von einer Zielbasisstation versorgt wird, wobei die Ursprungsbasisstation (30) ausgelegt ist zum:
Empfangen eines Weiterreichungsbefehls von der Zielbasisstation für eine direktzugriffskanallose, RACH-lose, Weiterreichung der drahtlosen Vorrichtung (50) an die Zielzelle, wobei der Weiterreichungsbefehl Konfigurationsinformationen über Zeiten für Uplink-Freigaben in der Zielzelle und eine Gültigkeitszeit für die Uplink-Freigaben umfasst, die Gültigkeitszeit in Bezug auf einen Systemrahmennummer-,SFN-,Wert der Ursprungszelle oder der Zielzelle spezifiziert ist, und die Gültigkeitszeit eine Zeit angibt, zu welcher ein Rückgriff auf eine Direktzugriffskanal-,RACH-,Prozedur zum Erlangen von Zugang zur Zielzelle von der drahtlosen Vorrichtung (50) initiiert werden sollte; und
Senden des Weiterreichungsbefehls an die drahtlose Vorrichtung (50).

10. Zielbasisstation (30), die zum Unterstützen von Weiterreichung einer drahtlosen Vorrichtung (50) von einer Ursprungszelle, die von einer Ursprungsbasisstation versorgt wird, an eine Zielzelle ausgelegt ist, die von der Zielbasisstation (30) versorgt wird, wobei die Zielbasisstation (30) ausgelegt ist zum:
Erstellen eines Weiterreichungsbefehls für eine direktzugriffskanallose, RACH-lose, Weiterreichung der drahtlosen Vorrichtung (50) an die Zielzelle, wobei der Weiterreichungsbefehl Konfigurationsinformationen über Zeiten für Uplink-Freigaben in der Zielzelle und eine Gültigkeitszeit für die Uplink-Freigaben umfasst, die Gültigkeitszeit in Bezug auf einen Systemrahmennummer-,SFN-,Wert der Ursprungszelle oder der Zielzelle spezifiziert ist, und die Gültigkeitszeit eine Zeit angibt, zu welcher ein Rückgriff auf eine Direktzugriffskanal-,RACH-,Prozedur zum Erlangen von Zugang zur Zielzelle von der drahtlosen Vorrichtung (50) initiiert werden sollte;
Senden des Weiterreichungsbefehls an die Ursprungsbasisstation zur Übertragung an die drahtlose Vorrichtung (50).

11. Zielbasisstation (30) nach Anspruch 10, wobei die Zielbasisstation (30) ferner zum Durchführen des Verfahrens (500) nach einem der Ansprüche 3 bis 5 ausgelegt ist.

12. Drahtlose Vorrichtung (50), die zur Weiterreichung der drahtlosen Vorrichtung (50) von einer Ursprungszelle an eine Zielzelle in einem drahtlosen Kommunikationssystem ausgelegt ist, wobei die drahtlose Vorrichtung (50) ausgelegt ist zum:
Empfangen eines Weiterreichungsbefehls von der versorgenden Zelle für eine direktzugriffskanallose, RACH-lose, Weiterreichung der drahtlosen Vorrichtung (50) an die Zielzelle, wobei der Weiterreichungsbefehl Konfigurationsinformationen über Zeiten für Uplink-,UL-,Freigaben in der Zielzelle und eine Gültigkeitszeit für die UL-Freigaben umfasst, wobei die Gültigkeitszeit in Bezug auf einen SFN-Wert der Ursprungszelle oder der Zielzelle spezifiziert ist;
Bestimmen der Gültigkeitszeit der UL-Freigaben für die RACH-lose Weiterreichung basierend auf einem Systemrahmennummer-,SFN-,Wert der Ursprungszelle oder der Zielzelle, um dadurch die Zeit zu bestimmen, zu welcher ein Rückgriff auf eine Direktzugriffskanal-,RACH-,Prozedur zum Erlangen von Zugang zur Zielzelle initiiert werden sollte; und
Initiieren einer Übertragung an die Zielzelle basierend auf der Gültigkeitszeit der UL-Freigaben für die RACH-lose Weiterreichung.

13. Drahtlose Vorrichtung (50) nach Anspruch 12, wobei die drahtlose Vorrichtung (50) ferner zum Durchführen des Verfahrens (700) nach einem Ansprüche 7 bis 8 ausgelegt ist.

14. Computerprogramm (46), umfassend Computerprogrammcode, der zur Ausführung durch einen Prozessor (32) in einer Ursprungsbasisstation (30) ausgelegt ist, die zum Unterstützen von Weiterreichung einer drahtlosen Vorrichtung (50) von einer Ursprungszelle, die von der Ursprungsbasisstation (30) versorgt wird, an eine Zielzelle ausgelegt ist, die von einer Zielbasisstation versorgt wird, wobei der Computerprogrammcode Anweisungen umfasst, die so konfiguriert sind, dass sie die Ursprungsbasisstation (30) zum Durchführen des Verfahren nach einem der Ansprüche 1 bis 2 veranlassen.

15. Computerprogramm (46), umfassend Computerprogrammcode, der zur Ausführung durch einen Prozessor (32) in einer Zielbasisstation (30) ausgelegt ist, die zum Unterstützen von Weiterreichung einer drahtlosen Vorrichtung (50) von einer Ursprungszelle, die von einer Ursprungsbasisstation versorgt wird, an eine Zielzelle ausgelegt ist, die von der Zielbasisstation (30) versorgt wird, wobei der Computerprogrammcode Anweisungen umfasst, die so konfiguriert sind, dass sie die Zielbasisstation (30) zum Durchführen des Verfahren nach einem der Ansprüche 3 bis 5 veranlassen.

16. Computerprogramm (46), umfassend Computerprogrammcode, der zur Ausführung durch einen Prozessor (52) in einer drahtlosen Vorrichtung (50) ausgelegt ist, die in einem drahtlosen Kommunikationsnetzwerk operiert, wobei der Computerprogrammcode Anweisungen umfasst, die so konfiguriert sind, dass sie die drahtlose Vorrichtung (50) zum Durchführen des Verfahren nach einem der Ansprüche 6 bis 8 veranlassen.

17. Computerlesbares Medium (44, 64), welches das Computerprogramm (46, 66) nach einem der Ansprüche 14 bis 16 darauf gespeichert aufweist.

## Revendications

1. Procédé (400), réalisé par une station de base source (30), pour un transfert intercellulaire d'un dispositif sans fil (50) depuis une cellule source desservie par la station de base source (30) à une cellule cible desservie par une station de base cible, le procédé (400) comprenant :
la réception (402), depuis la station de base cible, d'une commande de transfert intercellulaire pour un transfert intercellulaire sans canal d'accès aléatoire, sans RACH, du dispositif sans fil (50) à la cellule cible, la commande comprenant des informations de configuration relatives à des temps d'octrois de liaison montante dans la cellule cible et un temps de validité pour les octrois de liaison montante, le temps de validité étant spécifié en termes d'une valeur de nombre de trames de système, SFN, de la cellule source ou de la cellule cible, ledit temps de validité indiquant un temps auquel un repli sur une procédure de canal d'accès aléatoire, RACH, pour accéder à la cellule cible doit être lancé par le dispositif sans fil (50) ; et
la transmission (404) de la commande de transfert intercellulaire au dispositif sans fil (50).

2. Procédé (400) selon la revendication 1, dans lequel le temps de validité est spécifié en termes d'une valeur de SFN pour la cellule cible, et dans lequel les informations de configuration incluent en outre une valeur de décalage de SFN indiquant une différence entre des valeurs de SFN pour la cellule source et des valeurs de SFN contemporaines pour la cellule cible.

3. Procédé (500), réalisé par une station de base cible (30), pour un transfert intercellulaire d'un dispositif sans fil (50) depuis une cellule source desservie par la station de base source à une cellule cible desservie par la station de base cible (30), le procédé (500) comprenant :
la formation (502) d'une commande de transfert intercellulaire pour un transfert intercellulaire sans canal d'accès aléatoire, sans RACH, du dispositif sans fil (50) à la cellule cible, la commande comprenant des informations de configuration relatives à des temps d'octrois de liaison montante dans la cellule cible et un temps de validité pour les octrois de liaison montante, le temps de validité étant spécifié en termes d'une valeur de nombre de trames de système, SFN, de la cellule source ou de la cellule cible, ledit temps de validité indiquant un temps auquel un repli sur une procédure de canal d'accès aléatoire, RACH, pour accéder à la cellule cible doit être lancé par le dispositif sans fil (50) ; et
l'envoi (404) de la commande de transfert intercellulaire à la station de base source pour une transmission au dispositif sans fil (50).

4. Procédé (500) selon la revendication 3, dans lequel le temps de validité est spécifié en termes d'une valeur de SFN pour la cellule cible, et dans lequel les informations de configuration incluent en outre une valeur de décalage de SFN indiquant une différence entre des valeurs de SFN pour la cellule source et des valeurs de SFN contemporaines pour la cellule cible.

5. Procédé (500) selon la revendication 3, dans lequel le procédé (500) comprend en outre la détermination de la valeur de SFN pour la cellule source sur la base d'une valeur de SFN pour la cellule cible et correspondant au temps de validité, et sur la base d'un décalage de SFN indiquant une différence entre des valeurs de SFN pour la cellule source et des valeurs de SFN contemporaines pour la cellule cible.

6. Procédé (700), réalisé par un dispositif sans fil (50), pour un transfert intercellulaire dudit dispositif sans fil (50) depuis une cellule source à une cellule cible dans un système de communication sans fil, le procédé (700) comprenant :
la réception (702), depuis la cellule de desserte, d'une commande de transfert intercellulaire pour un transfert intercellulaire sans canal d'accès aléatoire, sans RACH, du dispositif sans fil (50) à la cellule cible, la commande de transfert intercellulaire comprenant des informations de configuration relatives à des temps d'octrois de liaison montante, UL, dans la cellule cible et un temps de validité pour les octrois UL, le temps de validité étant spécifié en termes d'une valeur de nombre de trames de système, SFN, de la cellule source ou de la cellule cible ;
la détermination (704) du temps de validité des octrois UL pour le transfert intercellulaire sans RACH, sur la base de la valeur de SFN de la cellule source ou de la cellule cible, en déterminant de ce fait le temps auquel un repli sur une procédure de canal d'accès aléatoire, RACH, pour accéder à la cellule cible doit être lancé ; et
le lancement (706) d'une transmission à la cellule cible, sur la base du temps de validité déterminé des octrois UL pour le transfert intercellulaire sans RACH.

7. Procédé (700) selon la revendication 6, dans lequel le temps de validité est spécifié en termes d'une première valeur de SFN pour la cellule cible, dans lequel les informations de configuration incluent en outre une valeur de décalage de SFN indiquant une différence entre des valeurs de SFN pour la cellule source et des valeurs de SFN contemporaines pour la cellule cible, et dans lequel ladite détermination (704) comprend l'application de la valeur de décalage de SFN à la première valeur de SFN pour la cellule cible.

8. Procédé (700) selon l'une quelconque des revendications 6 et 7, dans lequel l'au moins une valeur de SFN est spécifiée en termes d'une valeur de SFN pour la cellule source, dans lequel le procédé (700) comprend la détermination du temps ou des temps de validité directement à partir de la valeur de SFN pour la cellule source sans obtenir de valeurs de SFN depuis la cellule cible.

9. Station de base source (30) agencée pour prendre en charge un transfert intercellulaire d'un dispositif sans fil (50) depuis une cellule source desservie par la station de base source (30) à une cellule cible desservie par une station de base cible, dans laquelle la station de base source (30) est apte à :
recevoir, depuis la station de base cible, une commande de transfert intercellulaire pour un transfert intercellulaire sans canal d'accès aléatoire, sans RACH, du dispositif sans fil (50) à la cellule cible, la commande de transfert intercellulaire comprenant des informations de configuration relatives à des temps d'octrois de liaison montante dans la cellule cible et un temps de validité pour les octrois de liaison montante, le temps de validité étant spécifié en termes d'une valeur de nombre de trames de système, SFN, de la cellule source ou de la cellule cible, ledit temps de validité indiquant un temps auquel un repli sur une procédure de canal d'accès aléatoire, RACH, pour accéder à la cellule cible doit être lancé par le dispositif sans fil (50) ; et
transmettre la commande de transfert intercellulaire au dispositif sans fil (50).

10. Station de base cible (30) agencée pour prendre en charge un transfert intercellulaire d'un dispositif sans fil (50) depuis une cellule source desservie par une station de base source à une cellule cible desservie par la station de base cible (30), dans laquelle la station de base cible (30) est apte à :
former une commande de transfert intercellulaire pour un transfert intercellulaire sans canal d'accès aléatoire, sans RACH, du dispositif sans fil (50) à la cellule cible, la commande de transfert intercellulaire comprenant des informations de configuration relatives à des temps d'octrois de liaison montante dans la cellule cible et un temps de validité pour les octrois de liaison montante, le temps de validité étant spécifié en termes d'une valeur de nombre de trames de système, SFN, de la cellule source ou de la cellule cible, ledit temps de validité indiquant un temps auquel un repli sur une procédure de canal d'accès aléatoire, RACH, pour accéder à la cellule cible doit être lancé par le dispositif sans fil (50) ;
envoyer la commande de transfert intercellulaire à la station de base source pour une transmission au dispositif sans fil (50).

11. Station de base cible (30) selon la revendication 10, dans laquelle la station de base cible (30) est en outre apte à réaliser le procédé (500) selon l'une quelconque des revendications 3 à 5.

12. Dispositif sans fil (50) adapté à un transfert intercellulaire dudit dispositif sans fil (50) depuis une cellule source à une cellule cible dans un réseau de communication sans fil, le dispositif sans fil (50) étant apte à :
recevoir, depuis la cellule de desserte, une commande de transfert intercellulaire pour un transfert intercellulaire sans canal d'accès aléatoire, sans RACH, du dispositif sans fil (50) à la cellule cible, la commande de transfert intercellulaire comprenant des informations de configuration relatives à des temps d'octrois de liaison montante, UL, dans la cellule cible et un temps de validité pour les octrois UL, le temps de validité étant spécifié en termes d'une valeur de SFN de la cellule source ou de la cellule cible ;
déterminer le temps de validité des octrois UL pour le transfert intercellulaire sans RACH, sur la base d'une valeur de nombre de trames de système, SFN, de la cellule source ou de la cellule cible, en déterminant de ce fait un temps auquel un repli sur une procédure de canal d'accès aléatoire, RACH, pour accéder à la cellule cible doit être lancé ; et
lancer une transmission à la cellule cible, sur la base du temps de validité des octrois UL pour le transfert intercellulaire sans RACH.

13. Dispositif sans (50) selon la revendication 12, dans lequel le dispositif sans fil (50) est en outre apte à réaliser le procédé (700) selon l'une quelconque des revendications 7 et 8.

14. Programme d'ordinateur (46) comprenant un code de programme d'ordinateur configuré pour être exécuté par un processeur (32) dans une station de base source (30) configurée pour prendre en charge un transfert intercellulaire d'un dispositif sans fil (50) depuis une cellule source desservie par la station de base source (30) à une cellule cible desservie par une station de base cible, le code de programme d'ordinateur comprenant des instructions configurées pour amener la station de base source (30) à réaliser le procédé selon l'une quelconque des revendications 1 et 2.

15. Programme d'ordinateur (46) comprenant un code de programme d'ordinateur configuré pour être exécuté par un processeur (32) dans une station de base cible (30) configurée pour prendre en charge un transfert intercellulaire d'un dispositif sans fil (50) depuis une cellule source desservie par une station de base source à une cellule cible desservie par la station de base cible (30), le code de programme d'ordinateur comprenant des instructions configurées pour amener la station de base cible (30) à réaliser le procédé selon l'une quelconque des revendications 3 à 5.

16. Programme d'ordinateur (46) comprenant un code de programme d'ordinateur configuré pour être exécuté par un processeur (52) dans un dispositif sans fil (50) fonctionnant dans un réseau de communication sans fil, le code de programme d'ordinateur comprenant des instructions configurées pour amener le dispositif sans fil (50) à réaliser le procédé selon l'une quelconque des revendications 6 à 8.

17. Support lisible par ordinateur (44, 64) comprenant le programme d'ordinateur (46, 66) selon l'une quelconque des revendications 14 à 16 stocké sur celui-ci.
